# EUROPÄISCHE PATENTSCHRIFT

(11) **EP 1 963 828 B1**
(45) Veröffentlichungstag und Bekanntmachung des Hinweises auf die Patenterteilung: **03.03.2010**
(21) Anmeldenummer: 06829306.7
(22) Anmeldetag: 05.12.2006
(51) Int. Cl.: G01N 21/86, H04M 1/725

(54) **VERFAHREN ZUM MESSEN EINER ANALYTKONZENTRATION IN EINER PROBE EINES BIOLOGISCHEN FLUIDS**
METHOD FOR MEASURING AN ANALYTE CONCENTRATION IN A SAMPLE OF A BIOLOGICAL FLUID
PROCÉDÉ POUR MESURER LA CONCENTRATION D'UN ANALYTE DANS UN ÉCHANTILLON DE FLUIDE BIOLOGIQUE

(30) Priorität: 21.12.2005 EP 05027993
(43) Veröffentlichungstag der Anmeldung: 03.09.2008
(73) Patentinhaber: Micronas GmbH, 79108 Freiburg (DE)
(72) Erfinder: KLAPPROTH, Holger, 79108 Freiburg (DE); SIEBEN, Ulrich, 79279 Vörstetten (DE); YEE, Keen, Millwood 10546 (US)
(74) Vertreter: Huwer, Andreas
(86) Internationale Anmeldenummer: PCT/EP2006/011662
(87) Internationale Veröffentlichungsnummer: WO 2007/079843

(56) Entgegenhaltungen:
- EP-A- 1 324 597
- EP-A- 1 382 959
- EP-A1- 0 826 777
- WO-A-98/32004
- WO-A-2005/045401
- US-A- 5 130 258
- US-A- 5 905 808
- US-A1- 2002 001 852

## Beschreibung

Die Erfindung betrifft ein Verfahren zum Messen der Konzentration mindestens eines in einer Probe eines biologischen Fluids enthaltenen Analyten, wobei ein Teststreifen benutzt wird.

Derartige Teststreifen werden beispielsweise in der Medizin verwendet, um leicht erfassbare physiologische Parameter, Metaboliten oder Pathogene in einem biologischen Fluid, wie z.B. Urin nachzuweisen. Die Teststreifen weisen einen Träger auf, auf dem an einer Teststelle ein Farbreagenz angeordnet ist, das bei einem Kontakt mit dem Analyt eine Farbänderung an der Teststelle bewirkt. Die Farbänderung wird zu einem bestimmten Zeitpunkt nach dem Kontakt des Farbindikators mit der Fluid-Probe von einer zu untersuchenden Person durch Inaugenscheinnahme des Teststreifens detektiert. Dabei kann es jedoch zu Fehlablesungen kommen, beispielsweise durch eine falsche Wahrnehmung der Farbänderung, bei ungünstigen Lichtverhältnissen, weil die Person ein eingeschränktes Farbwahmehmungsvermögen hat oder weil der Ablesezeitpunkt nicht genau eingehalten wird. Wenn bei einem Patient der Gesundheitszustand mit Hilfe der Teststreifen über einen längeren Zeitraum überwacht wird, werden die Messergebnisse in der Regel aufgezeichnet. Auch dabei kann es zu Fehlern kommen. Außerdem ist das manuelle Protokollieren der Messergebnisse mühsam und zeitaufwändig.

Aus DE 10 2004 008 539 A1 ist ein Verfahren der eingangs genannten Art bekannt, bei dem der Teststreifen nach dem Inkontaktbringen mit dem Fluid in eine Aufnahme einer Positioniereinrichtung eingelegt wird, die an einer ortsfest zu der Positioniereinrichtung angeordneten Kamera vorgesehen ist. An der Aufnahme ist der Teststreifen in einer vorgegeben Lage relativ zu der Kamera fixiert. An der Positioniereinrichtung ist im Detektionsbereich der Kamera eine Farbskala angeordnet. Mit Hilfe der Kamera wird ein Farbbild aufgezeichet, auf dem der Teststreifen und die Farbskala abgebildet sind. Das Farbbild wird in eine Bildanalyseeinrichtung eingelesen, welche die dem Farbindikator und dem Farbabgleichbereich zugeordneten Bildbereiche lokalisiert und die Farbwerte dieser Bildbereiche bestimmt. Anhand der so ermittelten Farbwerte wird mit Hilfe von vorgegebenen Vergleichswerten die Analytkonzentration in der Probe bestimmt. Das Verfahren ermöglicht zwar eine größere Messgenauigkeit als das Ablesen der Farbänderung durch Inaugenscheinnahme, hat jedoch den Nachteil, dass eine relativ aufwändige stationäre Bilderfassungseinrichtung (Kamera mit Positioniereinrichtung) benötigt wird. Das Verfahren ist deshalb für eine Anwendung zu Hause nur bedingt geeignet.

Das Dokument WO98/32004 beschreibt ein Verfahren, wobei der Abstand zwischen dem Teststreifen und einem Bildsensor mittels Kalibrationszeichen erfasst wird.

US5905808 offenbart die Kalibration eines Bildsystems zur Überwachung chemischer Reaktionen, wobei der Abstand zwischen der Kamera und einem Kalibrationsobjekt kontinuerlich justiert wird.

US2002/0001852 beschreibt Teststreifen, die einen Zeitindikator aufweisen, dessen Farbänderung den geeigneten Zeitpunkt zur Ermittlung des Ergebnis vom Teststreifen zeigt.

Es besteht deshalb die Aufgabe, ein Verfahren zu schaffen, das eine hohe Messgenauigkeit aufweist und mit geringem apparativem Aufwand durchführbar ist.

Diese Aufgabe wird durch das Verfahren der Erfindung gelöst, das vom Anspruch 1 definiert wird.

In vorteilhafter Weise ist es dadurch möglich, das Farbbild ohne die Verwendung einer aufwendigen Positioniereinrichtung mit einer handelsüblichen Kamera, beispielsweise einer Handy-Kamera, aufzuzeichnen und dennoch eine hohe Messgenauigkeit zu erreichen. Dabei kann die Kamera manuell an dem Teststreifen positioniert und die Lage der Kamera ggf. in Abhängigkeit von Abweichung zwischen dem Messwert für die Relativposition und dem Sollwertbereich korrigiert werden. Der Messwert für die Relativposition zwischen Kamera und Teststreifen kann beispielsweise ein Abstandsmesswert sein, der mit Hilfe eines in die Kamera integrierten Abstandssensors erfasst werden kann. Der Messwert kann aber auch dadurch ermittelt werden, dass die dem Teststreifen zugeordneten Bildbereiche mit Methoden der Bildverarbeitung in dem Farbbild lokalisiert und hinsichtlich ihrer Lage und/oder ihrer Größe ausgewertet werden. Der auf dem Teststreifen vorgesehene Farbabgleichbereich ermöglicht es, die Analytkonzentration weitgehend unabhängig von der Farbtemperatur des bei der Aufnahme des Farbbilds vorhandenen Beleuchtungslichts zu bestimmen.

Bei einer vorteilhaften Ausführungsform der Erfindung wird in Abhängigkeit von der Abweichung zwischen dem Messwert und dem Sollwertbereich ein optisches und/oder akustisches Signal erzeugt. Das optische Signal kann ein Meldungstext, eine Grafik oder ein Symbol sein, der (die/das) auf einem an der Kamera vorgesehenen Bildschirm ausgegeben wird. So kann der Benutzer beispielsweise dazu aufgefordert werden, die Kamera näher an dem Teststreifen zu positionieren oder in eine bestimmte Richtung zu verkippen, zu verdrehen und/oder zu verschieben, damit die Ebene, in der sich der Teststreifen erstreckt, genau senkrecht zur optischen Achse der Kamera angeordnet und der Teststreifen außerdem mittig und mit seiner Längsachse in eine bestimmte Richtung weisend auf dem Farbbild abgebildet wird. In entsprechender Weise kann der Benutzer aufgefordert werden, die Beleuchtung zu verändern. Dabei kann an verschiedenen Stellen des Teststreifens die Beleuchtung gemessen und mit einem Vorgabewert verglichen werden, um eine zu helle, zu dunkle und/oder ungleichmäßige Beleuchtung des Teststreifens zu detektieren. Ggf ist können keine Beleuchtungsungleichmäßigkeiten mit Methoden der Bildverarbeitung auch noch nach Aufzeichnung des Farbbilds korrigiert werden. Das akustische Signal kann ein Signalton sein, der beispielsweise in Abhängigkeit von der Abweichung zwischen dem Messwert für die Relafivposifion (Kamera - Teststreifen) seine Frequenz ändert. Bevorzugt ist das akustische Signal ein Sprachausgabesignal, über das ähnlich wie bei einem Navigationssystem einfache Anweisungen an den Benutzer der Kamera übermittelt werden können. Das Sprachausgabesignal kann bei einem Kamera-Handy über einen in das Handy integrierten Lautsprecher einer Freisprecheinrichtung ausgegeben werden.

Vorteilhaft ist, wenn für den Fall, dass bei dem Vergleich keine Abweichung zwischen der Relativposition und dem Sollwertbereich ermittelt wird, das Farbbild in einem Bildspeicher abgelegt wird. Das Farbbild wird also erst gespeichert, nachdem die Kamera richtig positioniert wurde. Solange diese nicht der Fall ist, ist das Abspeichern des Farbbilds gesperrt. Dadurch wird in dem Bildspeicher Speicherplatz eingespart. Wenn der Benutzer den Zeitpunkt, an dem die Fluid-Probe mit dem Teststreifen in Kontakt gebracht wurde, beispielsweise durch Drücken eines Startknopfs an der Kamera bekannt macht, ist es sogar möglich, dass das Ablegen des Farbbilds in dem Bildspeicher nur innerhalb eines bestimmten Zeitfensters freigegeben wird. Das gespeicherte Bild kann zu einem späteren Zeitpunkt aus dem Bildspeicher abgerufen und auf einem Bildschirm angezeigt und/oder gedruckt werden, beispielsweise um es einem Arzt vorzulegen und/oder es mit anderen Teststreifen-Bildern zu vergleichen.

Bei einer zweckmäßigen Ausgestaltung des Verfahrens wird die Größe und/oder Lage des Teststreifens in dem Farbbild ermittelt und mit Vorgabewerten verglichen, wobei bei einer Abweichung der Größe und/oder Lage von den Vorgabewerten das Farbbild derart geometrisch entzerrt und/oder skaliert wird, dass in dem entzerrten und/oder skalierten Farbbild die Größe und/oder Lage des Teststreifens mit den Vorgabewerten übereinstimmt. Das entzerrte bzw. skalierte Farbbild kann dann in einer Datenbank abgelegt werden. Auf diese Weise können kleinere Fehlpositionierungen der Kamera nachträglich korrigiert werden. Auf den in der Datenbank abgelegten Farbbildern weisen die Teststreifen dann alle das gleiche Format auf, so dass die Farbbilder gut miteinander vergleichbar sind.

Bei der Erfindung wird die Zeitdauer zwischen dem Inkontaktbringen der Fluid-Probe mit der Teststelle und der Aufnahme des Farbbilds bestimmt, wobei aus der Zeitdauer, den Farbwerten und vorgegebenen Vergleichswerten die Analytkonzentration in der Probe ermittelt wird. Das Verfahren ermöglicht dadurch eine noch größere Messgenauigkeit. Außerhalb der Definition der vorliegenden Erfindung kann zum Messen der Zeitdauer in die Kamera ein Zeitgeber integriert sein. Das Inkontaktbringen der Fluid-Probe mit der Teststelle kann der Kamera beispielsweise durch Betätigen eines an der Kamera vorgesehenen Startknopfs bekannt gemacht werden.

Bei der Erfindung vorgesehen ist, dass der Teststreifen mindestens einen bei einem Kontakt mit dem Fluid seine Farbe unabhängig von der Konzentration des mindestens einen in dem Fluid enthaltenen Analyts verändernden Zeitindikator aufweist, dass das Farbbild derart erfasst wird, dass der Zeitindikator auf dem Farbbild abgebildet wird, dass der dem Zeitindikator zugeordnete Bildbereich in dem Farbbild lokalisiert und der Farbwert dieses Bildbereichs bestimmt wird, und dass anhand des Farbwerts mit Hilfe von vorgegebenen Referenzwerten die Zeitdauer zwischen dem Inkontaktbringen der Fluid-Probe mit der Teststelle und der Aufnahme des Farbbilds bestimmt wird. Die Zeitdauer kann dann vollautomatisch gemessen werden, ohne dass der Benutzer der Kamera das Inkontaktbringen der Fluid-Probe der Kamera durch Betätigen eines Startknopfs bekannt zu machen braucht. Somit werden Fehler bei der Bedienung des Startknopfs von vorne herein vermieden. Darüber hinaus ist durch den Zeitindikator bei jedem Farbbild die Zeitdauer jeweils "unverlierbar" in den Bilddaten gespeichert.

Bei einer vorteilhaften Ausführungsform der Erfindung ist der Zeitindikator derart gewählt, dass er bei einem Kontakt mit dem Fluid seine Farbe kontinuierlich verändert. Die Zeitdauer zwischen dem Inkontaktbringen der Fluid-Probe mit der Teststelle und der Aufnahme des Farbbilds kann dann stufenlos gemessen werden.

Bei einer anderen zweckmäßigen Ausführungsform der Erfindung weist der Teststreifen mehrere Zeitindikatoren auf, die derart gewählt sind, dass sie bei einem Kontakt mit dem Fluid jeweils ihre Farbe innerhalb direkt aufeinander folgender und/oder zeitlich voneinander beabstandeter Zeitintervalle verändern. Die Zeit ist dann an den Zeitindikatoren leicht ablesbar. Die Zeitintervalle, innerhalb der die einzelnen Zeitindikatoren jeweils ihre Farbe verändern, sind bevorzugt relativ kurz gewählt, insbesondere kürzer als 5 Sekunden, gegebenenfalls kürzer als 3 Sekunden oder sogar kürzer als eine Sekunde. Die Zeitindikatoren können dabei nach dem Prinzip der Zeitreaktion von Landolt arbeiten. Somit ergibt sich auf dem Teststreifen eine Art "chemische Digitaluhr"

Vorteilhaft ist, wenn eine Bildsequenz aufgezeichnet wird, die zusätzlich zu dem ersten Farbbild mindestens ein weiteres Farbbild aufweist. Die einzelnen Farbindikatoren können dann in unterschiedlichen Zeitabständen nach dem Inkontaktbringen mit der Probe bildlich erfasst werden, wobei die Zeitpunkte derart gewählt werden, dass die zu detektierenden Farbveränderungen jeweils .in einem günstigen Aussteuerungsbereich liegen.

Bei einer anderen vorteilhaften Ausführungsform der Erfindung wird eine Bildsequenz aufgezeichnet, die zusätzlich zu dem ersten Farbbild mindestens ein weiteres Farbbild aufweist, auf dem zumindest der Farbindikator abgebildet ist, wobei der Zeitunterschied zwischen den Zeitpunkten, an denen die Farbbilder aufgezeichnet werden, ermittelt wird, wobei der dem Farbindikator zugeordnete Bildbereich für das wenigstens eine weitere Farbbild lokalisiert und der Farbwert dieses Bildbereichs bestimmt wird, und wobei aus dem (den) Zeitunterschied(en) und den Farbwerten und mit Hilfe von vorgegebenen Vergleichswerten die Analytkonzentration in der Probe bestimmt wird. Dabei kann aus dem zeitlichen Verlauf der Farbveränderung mit Hilfe von Tabellen die Analytkonzentration ermittelt werden.

Das erfindungsgemäße Verfahren kann mit Hilfe eines Computerprogramms ausgeführt werden, das auf einer einen Mikroprozessor aufweisenden, programmierbaren Kamera abläuft. Das Computerprogramm kann mit dem Teststreifen auf einem maschinenlesbaren Datenträger, wie z.B. einer CD/ROM oder einer Diskette geliefert werden. Der Datenträger kann auch ein Read-Only-Memory, ein Random-Access-Memory oder ein Flash-Memory sein. Das Computerprogramm kann auch im Internet auf einem Server bereitgestellt sein und von dort in die programmierbare Kamera herunter geladen werden.

Bezüglich des Teststreifens ist erforderlich, dass der Teststreifen einen Träger mit mindestens einer Teststelle aufweist, an der bei einem Kontakt mit der Fluid-Probe in Abhängigkeit von der Konzentration des Analyten an der Teststelle ein Farbindikator anbringbar ist, und dass der Träger mindestens einen die Farbe Weiß und/oder eine Farbskala umfassenden Referenzfarbbereich aufweist. Der Referenzfarbbereich ist also direkt an dem Träger angebracht, so dass er auf einfache Weise zusammen mit dem mindestens einen Farbindikator mittels der Kamera auf dem Farbbild abgebildet werden kann.

Vorteilhaft ist, wenn der Träger eine Membran ist, wenn auf der Membran mindestens eine Aufnahmestelle für das Fluid vorgesehen ist, wenn mit Abstand zu der Aufnahmestelle ein Absorptionsmittel mit der Membran in Kontakt steht, und wenn zwischen der Aufnahmestelle und dem Absorptionsmittel die mindestens eine Teststelle angeordnet ist. Dabei wird das Fluid durch die semipermeable Membran hindurch kontrolliert dem Farbindikator zugeführt. Der Teststreifen ist dadurch auf einfache Weise handhabbar und ermöglicht dennoch eine hohe Messgenauigkeit und eine gute Reproduzierbarkeit der Messergebnisse.

Der Teststreifen weist mindestens einen bei einem Kontakt mit dem Fluid seine Farbe unabhängig von der Konzentration des mindestens einen in dem Fluid enthaltenen Analyts verändernden Zeitindikator auf Anhand der Farbe des Zeitindikators lässt sich dann die seit dem in Kontaktbringen des Fluids mit dem Teststreifen verstrichene Zeit ermitteln.

Der Zeitindikator ist bevorzugt derart gewählt, dass er bei einem Kontakt mit dem Fluid seine Farbe kontinuierlich verändert. Der Zeitindikator weist dazu bevorzugt einen Farbstoff mit hohem Molekulargewicht, insbesondere ein goldkonjugiertes Protein auf, der bei einem Kontakt mit dem Fluid in die Membran diffundiert und dabei seine Farbe abschwächt. Durch die Diffusion des Zeitindikators, die aufgrund des hohen Molekulargewichts nur relativ langsam erfolgt, verteilt sich der Zeitindikator nach dem Kontakt mit dem Fluid in der Membran, wobei die Sättigung der Farbe des Zeitindikators abnimmt. Anhand der Farbsättigung kann die Zeitdauer, während der der Teststreifen mit dem Fluid in Kontakt stand, mit Hilfe von Vergleichswerten bestimmt werden. Je geringer die Farbsättigung ist, desto größer ist die Zeitdauer.

Bei einem Beispiel ist auf dem Träger mindestens eine maschinenlesbare, vorzugsweise optische Kodierung angebracht, in der eine Information über
- wenigstens ein an der wenigstens einen Testselle angeordnetes Farbreagenz,
- die Lage wenigstens einer Teststelle auf dem Träger,
- eine für zumindest eine Teststelle vorgesehene Zeitdauer zwischen dem Inkontaktbringen der Probe mit der Teststelle und dem bildlichen Erfassen des Farbindikators,
- mindestens einen Vergleichswert zur Bestimmung der Analytkonzentration aus den für den Farbindikator und den Referenzfarbbereich ermittelten Farbwerten und/oder
- ein Verfallsdatum des Teststreifens
direkt oder indirekt in Form eines Verweises auf eine in einem Datenspeicher einer Kamera abgelegte Information gespeichert ist. Dabei ist es sogar möglich, dass zu den einzelnen, auf dem Träger angeordneten Teststellen unterschiedliche Zeiten für die zwischen dem Inkontaktbringen der Probe mit dem Farbindikator und dem bildlichen Erfassen des Farbindikators einzuhaltenden Zeitdauern gespeichert sind, so dass die Farbveränderung der Farbindikatoren auf dem Farbbild jeweils zu erkennen ist. Die betreffenden, in der Kodierung gespeicherten Zeitdauer-Informationen können dann mit Hilfe der Kamera optisch eingelesen und ggf. zum automatischen Auslösen der Farbbildaufzeichnungen verwendet werden. Der Benutzer kann dazu der Kamera den Zeitpunkt des Inkontaktbringens der Probe mit den Teststellen beispielsweise durch Betätigen eines an der Kamera vorgesehenen Knopfs bekannt machen, woraufhin eine in der Kamera integrierte Steuereinrichtung die Zeit misst und jeweils nach Ablauf einer in einer maschinenlesbaren Kodierung gespeicherten Zeitdauer automatisch das Aufzeichnen eines Farbbilds auslöst. Nachdem das letzte Farbbild aufgezeichnet wurde, kann das Ende der Messung dem Benutzer der Kamera vorzugsweise akustisch und/oder optisch mit Hilfe einer an der Kamera vorgesehenen Anzeigeeinrichtung signalisiert werden. Mit Hilfe der optischen Kodierung ist es auch möglich, die Steuereinrichtung automatisch zu initialisieren. Die Kamera kann dann anhand der Kodierung automatisch von einer ersten, für das Fotografieren von normalen Bildern vorgesehenen Betriebsart, in eine zweite, für das bildliche Erfassen der Teststreifen vorgesehene Betriebsart, umschalten. Nach dem Detektieren der maschinenlesbaren Kodierung kann der Benutzer der Kamera ggf. aufgefordert werden, den Umschaltvorgang auszulösen oder nicht auszulösen.

Auf dem Träger kann ferner eine maschinenlesbare, vorzugsweise optische Kodierung angebracht sein, in der beispielsweise Informationen über wenigstens ein an der mindestens einen Teststelle angeordnetes Farbreagenz, die Lage der Teststelle(n) auf dem Träger, eine Information über eine für zumindest eine Teststelle vorgesehene Zeitdauer zwischen dem Inkontaktbringen der Probe mit der Teststelle und dem bildlichen Erfassen des Farbindikators, über mindestens einen Vergleichswert zur Bestimmung der Analytkonzentration aus den für den Farbindikator und den Referenzfarbbereich ermittelten Farbwerten und/oder ein Verfallsdatum des Teststreifens gespeichert sein können. Die Kodierung kann auch einen Verweis auf eine Information enthalten, wie z.B. eine Internetadresse, unter der die Information abrufbar ist.

Vorteilhaft ist, wenn die Membran nebeneinander mindestens zwei hydrophile Teststellen aufweist, die durch wenigstens einen hydrophoben Beschichtungsbereich voneinander beabstandet sind, und wenn an den Teststellen vorzugsweise Farbreagenzien angeordnet sind. Die Farbreagenzien bzw. die Teststellen, an denen die Farbreagenzien angeordnet sind, können dann sehr kompakte Abmessungen aufweisen und dicht nebeneinander angeordnet sein, so dass eine entsprechend große Anzahl von Teststellen auf dem Träger vorgesehen sein kann. Dabei wird durch den wenigstens einen als Barriere wirkenden hydrophoben Beschichtungsbereich nach dem Inkontaktbringen des Trägers mit der Fluid-Probe ein Fluidaustausch zwischen den Teststellen und somit eine Farbverfälschung vermieden.

Auf der Aufnahmestelle kann ein Filter angeordnet sein. Dadurch ist es möglich, bestimmte, in dem Fluid enthaltene Stoffe auf einfache Weise von der Membran fernzuhalten.

Bei einem Beispiel sind auf den hydrophilen Beschichtungsbereichen jeweils mehrere voneinander beabstandete Stellen mit vorzugsweise unterschiedlichen Farbindikatoren angeordnet. Dabei kann der Teststreifen mehrere von diesen Beschichtungsbereichen aufweisen, so dass mehrere aus dem Fuid herausgefilterte Flüssigkeiten gleichzeitig auf das Vorhandensein mehrerer unterschiedlicher Analyten untersucht werden können.

Erwähnt werden soll noch, dass an der mindestens einen Teststelle auch ein für den Analyten bindungsspezifischer Rezeptor immobilisiert sein kann. Der Farbindikator kann in diesem Fall ein Marker sein kann, der in Abhängigkeit von der Bindung des Analyten an den Rezeptor an der Teststelle eine Lumineszenzstrahlung aussendet. Der Marker kann durch eine Anregungsstrahlung und/oder durch Chemilumineszenz zur Aussendung der Lumineszenzstrahlung angeregt werden.

Nachfolgend ist ein Ausführungsbeispiel der Erfindung anhand der Zeichnung näher erläutert. Es zeigen:
- Fig. 1: eine Aufsicht auf ein erstes Ausführungsbeispiel eines Teststreifens,
- Fig. 2: einen Teilquerschnitt durch den Teststreifen,
- Fig. 3: eine in ein Mobiltelefon integrierte Digitalkamera beim Fotografieren des Teststreifens und
- Fig. 4: eine Aufsicht auf ein zweites Ausführungsbeispiel des Teststreifens.

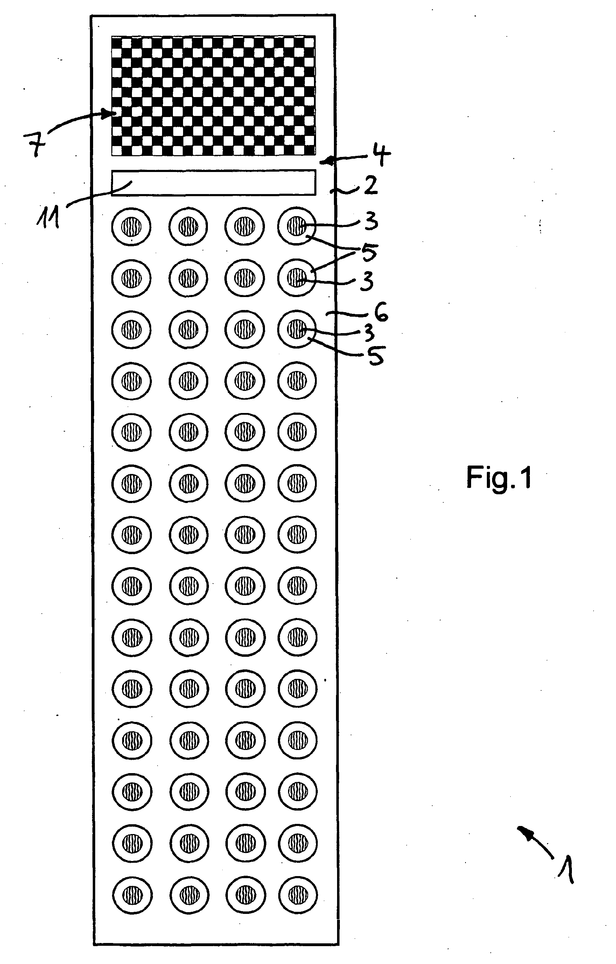

Ein in Fig. 1 im Ganzen mit 1 bezeichneter Teststreifen zum Bestimmen von Analytkonzentrationen in einer Probe eines biologischen Fluids weist einen Träger 2 mit einer weißen Oberfläche auf Auf der Oberfläche des Trägers 2 sind mehrere voneinander beabstandete Teststellen vorgesehen, an denen jeweils ein Farbreagenz 3 angeordnet ist, das bei einem Kontakt mit einem zu detektierenden Analyt aufgrund einer chemischen Reaktion in an sich bekannter Weise einen Farbindikator erzeugt, der die Farbe der Teststelle verändert. Die Teststellen sind matrixförmig in mehreren Reihen und Spalten angeordnet. Die einzelnen Teststellen sind mit unterschiedlichen Farbreagenzien 3 beschichtet, so dass mit dem Teststreifen 1 mehrere unterschiedliche Analyte gleichzeitig nachgewiesen bzw. in ihrer Konzentration bestimmt werden können. Die weiße Oberfläche des Trägers 2 dient als Referenzfarbbereich 4, mit dessen Hilfe es möglich ist, Abweichungen des Spektralbereichs des Umgebungs- oder Beleuchtungslichts von einem Sollspektralbereich zu kompensieren.

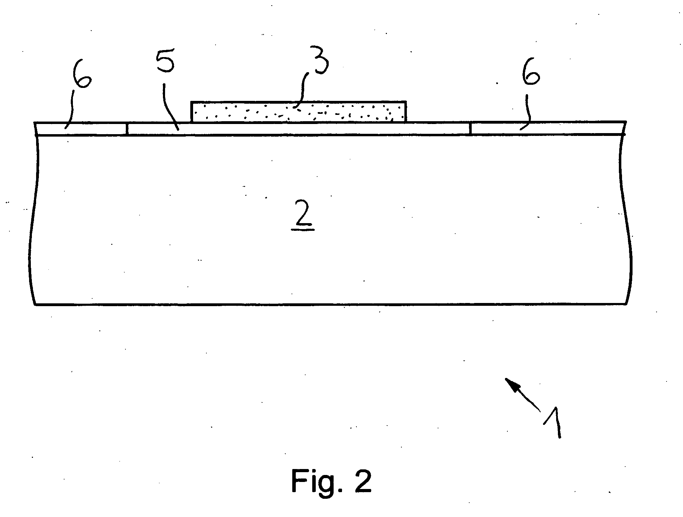

In Fig. 1 und 2 ist erkennbar, dass die Farbreagenzien 3 jeweils auf einem hydrophilen Beschichtungsbereich 5 angeordnet sind, der auf die Oberfläche des Trägers 2 aufgebracht ist. Zwischen den hydrophilen Beschichtungsbereichen 5 ist ein hydrophober Beschichtungsbereich 6 vorgesehen, der nicht mit dem Farbreagenz 3 beschichtet ist und die hydrophilen Beschichtungsbereiche 5 umgrenzt.

An einer von den Teststellen beabstandeten Stelle des Teststreifens 1 ist ein Zeitindikator 11 vorgesehen, der bei einem Kontakt mit dem Fluid seine Farbe kontinuierlich verändert. Dabei ist die Farbveränderung unabhängig von den Konzentrationen der in dem Fluid enthaltenen Analyten.

Neben der Matrix mit den Teststellen ist auf dem Träger 2 eine zweidimensionale optische Kodierung angebracht, in der ein Verweis auf eine im Internet hinterlegte Tabelle mit technischen Daten über den Teststreifen 1 gespeichert ist. In der Tabelle sind Angaben über die Abmessungen des Teststreifens 1, über die Anordnung der einzelnen Testfelder an der Oberfläche des Teststreifens 1, über Reagenzien 3, die an den Teststellen angeordnet sind, und Angaben über die Farbveränderung der Testfelder, die bei einem Konatkt mit unterschiedlich konzentrierten Analyten auftritt, abgelegt.

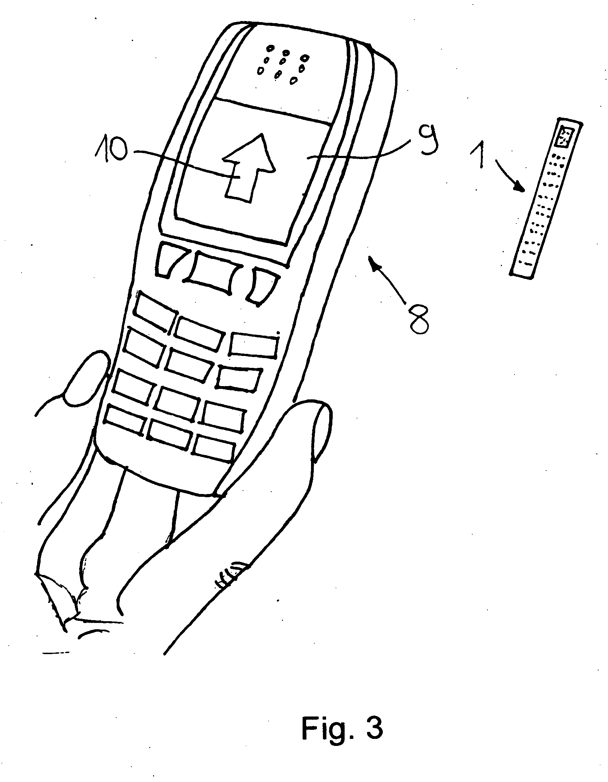

Zum Messen der Konzentrationen der zu untersuchenden Analyten wird die Fluid-Probe zunächst mit den Teststellen in Kontakt gebracht Der Teststreifen 1 kann dazu beispielsweise kurz in die Fluid-Probe eingetaucht und wieder aus dieser herausgezogen werden. Danach wird zum bildlichen Erfassen der Farbindikatoren und der weißen Oberfläche des Trägers 2 eine Kamera 8 an dem Teststreifen 1 positioniert, die in ein Mobiltelefon integriert ist (Fig. 3). Die Erfindung ist jedoch nicht auf die Verwendung einer Handy-Kamera beschränkt und kann auch mit Hilfe einer anderen Kamera durchgeführt werden.

Die Kamera 8 wird mit ihrem Objektiv zunächst grob vom Benutzer auf den Teststreifen 1 ausgerichtet. Die Kamera 8 weist in der Zeichnung nicht näher dargestellte Sensoren zur Erfassung der Relativposition zwischen der Kamera 8 und dem Teststreifen 1 auf, nämlich einen Infrarot-Abstandssensor und einen flächigen Farbbildsensor, beispielsweise einen CCD-Chip, auf den der Teststreifen 1 mittels eines Objektivs abgebildet wird. Mit Hilfe des Farbbildsensors wird ein Farbbild aufgezeichnet auf dem der Teststreifen 1 mit den Farbindikatoren, der Zeitindikator 11 und die weiße Oberfläche des Trägers 2 abgebildet ist.

Mit Hilfe des Abstandssensors wird der Abstand zwischen der Kamera 8 und dem Teststreifen 1 gemessen. und mit einem vorgegebenen ersten Sollwertbereich verglichen.

Die Kamera 8 wird durch einen programmierbaren Mikroprozessor gesteuert, der mit einem Programmspeicher verbunden ist, in dem ein Computerprogramm abgelegt ist, das mit Methoden der Bildverarbeitung die Lage und Größe des Abbilds des Teststreifens 1 in dem Farbbild bestimmt und mit einem vorgegebenen zweiten Sollwertbereich vergleicht.

Wird bei dem Vergleich der Messwerte mit den Sollwertbereichen eine Abweichung festgestellt, wird auf einem an der Kamera 8 vorgesehenen Bildschirm 9 ein Hinweis an den Benutzer der Kamera 8 ausgegeben, aus dem ersichtlich ist, wie die Lage der Kamera 8 relativ zu dem Teststreifen 1 zu ändern ist, damit sich die Abweichung reduziert. In Fig. 3 ist erkennbar, dass auf dem Bildschirm 9 beispielsweise ein Pfeil 10 abgebildet werden kann, um anzudeuten, dass die Kamera 8 in Richtung des Pfeils 10 verschoben werden muss, um die Kamera 8 in die richtige Position zu bringen. In entsprechender Weise kann anstelle des Pfeils 10 oder zusätzlich zu diesem auch eine Textmeldung auf dem Bildschirm 9 angezeigt werden.

Nach einer vorgegebenen Zeitdauer werden mittels des Abstandssensors, des Farbbildsensors und des Computerprogramms neue Messwerte ermittelt und mit den Sollwertbereichen verglichen. Wird dabei erneut eine Abweichung festgestellt, wird ein weiterer Hinweis auf dem Bildschirm 9 angezeigt. Dies wird solange wiederholt, bis der Benutzer die Kamera 8 schließlich in die durch die Sollwertbereiche vorgegebene Lage gebracht hat.

Dann wird von dem Computerprogramm das Aufzeichnen einer Bildsequenz ausgelöst. Dabei werden mit Hilfe des Farbbildsensors nacheinander in vorgegebenen Zeitabständen mehrere Farbbilder aufgezeichnet, auf denen jeweils die Farbindikatoren, der Zeitindikator 11 und die weiße Oberfläche des Trägers 2 abgebildet sind. Bei Bedarf kann der Teststreifenl mittels eines in die Kamera 8 integrierten Blitzlichts oder dergleichen Lichtquelle während der Aufnahme künstlich beleuchtet werden. Die Farbbilder werden in einem in der Kamera 8 angeordneten Bildspeicher abgelegt. Bei Bedarf können sie über das Mobiltelefon an einen separaten Computer, der beispielsweise in einer vom Aufzeichnungsort entfernten Arztpraxis stehen kann, übermittelt werden.

Mit Hilfe des Computerprogramms werden für jedes Farbbild jeweils die den einzelnen Farbindikatoren, dem Zeitindikator 11 und der weißen Trägeroberfläche zugeordneten Bildbereiche lokalisiert und die Farbwerte dieser Bildbereiche bestimmt.

Mit Hilfe des für den Zeitindikator 11 ermittelten Farbwerts und vorgegebenen Referenzwerten, die jeweils einem Farbwert eine Zeitdauer zuordnen, wird die Zeitdauer zwischen dem Inkontaktbringen der Fluid-Probe mit dem Farbindikator und der Aufnahme des Farbbilds bestimmt. Die Referenzwerte können in einem Datenspeicher abgelegt sein.

Anhand der für die Farbindikatoren ermittelten Farbwerte und der Zeitdauer zwischen dem Inkontaktbringen der Fluid-Probe mit dem Farbindikator und der Aufnahme des Farbbilds werden mit Hilfe von vorgegebenen Vergleichswerten, die beispielsweise in Form einer Tabelle vorliegen können, die Analytkonzentrationen der einzelnen Analyten in der Probe bestimmt. Die so erhaltenen Messwerte werden auf dem Bildschirm angezeigt, beispielsweise in Textform und/oder in graphischer Darstellung (z.B. Balkendiagramm). Die Messwerte können ebenfalls über das Mobiltelefon an einen separaten Computer und/oder eine separate Anzeige übermittelt werden, vorzugsweise per E-Mail. Ferner können die Messwerte und/oder die die Farbveränderung der Farbindikatoren dokumentierenden Farbbilder an eine Gesundheitsdatenbank übermittelt werden.

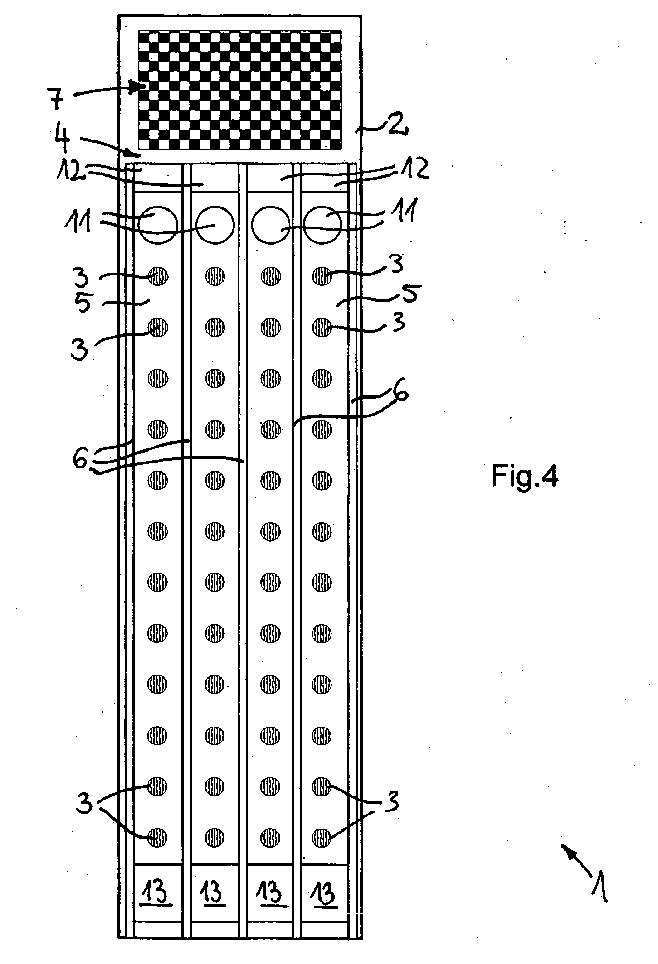

Bei dem in Fig. 4 gezeigten Ausführungsbeispiel ist der Träger 2 eine Membran, die an ihrer den Farbreagenzien 3 abgewandten Rückseite durch eine Kunststoffschicht verstärkt ist. Die hydrophilen Beschichtungsbereiche 5 sind streifenförmig ausgestaltet und parallel zueinander angeordnet. Zwischen zwei zueinander benachbarten hydrophilen Beschichtungsbereichen 5 ist jeweils ein streifenförmiger hydrophober Beschichtungsbereich 6 vorgesehen.

Auf jedem hydrophilen Beschichtungsbereich 5 ist jeweils eine Anzahl von Farbreagentien 3 angeordnet, die voneinander beabstandet sind und eine Reihe bilden, die etwa parallel zur Längserstreckung der spaltenförmigen hydrophilen Beschichtungsbereichen 5 verläuft. An einem der beiden Endbereiche der hydrophilen Beschichtungsbereiche 5 ist auf der Membran jeweils ein Filter 12 mit einer Aufnahmestelle für das zu analysierende Fluid angeordnet. An seiner der Aufnahmestelle abgewandten Rückseite kontaktiert das Filter 12 die Membran. An dem anderen Endbereich jedes hydrophilen Beschichtungsbereichs 5 steht jeweils ein Absorptionsmittel 13 mit der Membran in Kontakt. Nach dem Aufbringen des Fluids auf die Aufnahmestelle durchdringt dieses zunächst den Filter 12 und diffundiert dann durch das Innere der Membran zu dem Absorptionsmittel 13. Auf dem Weg zu dem Absorptionsmittel 13 gerät das Fluid mit den Farbindikatoren in Kontakt. Dicht benachbart zu jedem Filter 12 ist jeweils ein Zeitindikator 11 auf der Membran angeordnet. Der Abstand zwischen der Aufnahmestelle und dem dieser zugeordneten Zeitindikator 11 ist jeweils geringer als der Abstand zwischen der Aufnahmestelle und dem am nächsten zu der Aufnahmestelle angeordneten Farbindikator. Das Aufzeichnen der Farbbilder erfolgt im Wesentlichen wie bei dem in Fig. 1 gezeigten Ausführungsbeispiel, jedoch mit dem Unterschied, dass das Betätigen des Startknopfs entfällt

## Patentansprüche

1. Verfahren zum Messen der Konzentration mindestens eines in einer Probe eines biologischen Fluids enthaltenen Analyten,
a) wobei ein Teststreifen (1) bereitgestellt wird, der mindestens eine Teststelle, wenigstens einen Zeitindikator (11) und zumindest einen die Farbe Weiß und/oder eine Farbskala umfassenden Referenzfarbbereich (4) aufweist,
b) wobei die Fluid-Probe mit der Teststelle und dem Zeitindikator (11) in Kontakt gebracht wird,
c) wobei in Abhängigkeit von der Konzentration des Analyten an der Teststelle ein Farbindikator angeordnet wird,
d) wobei in Abhängigkeit von der Zeitdauer des Inkontaktbringens des Fluids mit der Teststelle und unabhängig von der Konzentration des mindestens einen Analyts die Farbe des Zeitindikators verändert wird,
e) wobei eine Kamera (8) an dem Teststreifen (1) positioniert wird,
f) wobei mindestens ein Messwert für die Relativposition zwischen Kamera (8) und Teststreifen (1) ermittelt und mit einem Sollwertbereich verglichen
g) wobei bei einer Abweichung zwischen dem Messwert und dem Sollwertbereich die Kamera (8) zum Reduzieren der Abweichung relativ zu dem Teststreifen (1) bewegt und die Schritte f) und g) wiederholt werden,
h) wobei mit Hilfe der Kamera (8) ein Farbbild erfasst wird, auf dem zumindest der Farbindikator, der Zeitindikator (11) und der Referenzfarbbereich (4) abgebildet sind,
j) wobei die dem Farbindikator, dem Zeitindikator (11) und dem Referenzfarbbereich (4) zugeordneten Bildbereiche in dem Farbbild lokalisiert und die Farbwerte dieser Bildbereiche bestimmt werden,
k) wobei anhand des für den Zeitindikator (11) bestimmten Farbwerts mit Hilfe von vorgegebenen Referenzwerten die Zeitdauer zwischen dem Inkontaktbringen der Fluid-Probe mit der Teststelle und der Aufnahme des Farbbilds bestimmt wird, und
l) wobei anhand der für den Farbindikator und den Referenzfarbbereich (4) bestimmten Farbwerte und anhand der Zeitdauer mit Hilfe von vorgegebenen Vergleichswerten die Anatytkonzentration in der Probe bestimmt wird.

2. Verfahren nach Anspruch 1, **dadurch gekennzeichnet, dass** in Abhängigkeit von der Abweichung zwischen dem Messwert und dem Sollwertbereich ein optisches und/oder akustisches Signal erzeugt wird.

3. Verfahren nach Anspruch 1 oder 2, **dadurch gekennzeichnet, dass** für den Fall, dass bei dem Vergleich keine Abweichung zwischen Relativposition und Sollwertbereich ermittelt wird, das mindestens eine Farbbild in einem Bildspeicher abgelegt wird.

4. Verfahren nach einem der Ansprüche 1 bis 3, **dadurch gekennzeichnet, dass** die Größe und/oder Lage des Teststreifens (1) in dem Farbbild ermittelt und mit Vorgabewerten verglichen wird, und dass bei einer Abweichung der Größe und/oder Lage von den Vorgabewerten das Farbbild derart geometrisch entzerrt und/oder skaliert wird, dass in dem entzerrten und/oder skalierten Farbbild die Größe und/oder Lage des Teststreifens (1) mit den Vorgabewerten übereinstimmt

5. Verfahren nach einem der Ansprüche 1 bis 4, **dadurch gekennzeichnet, dass** der Zeitindikator (11) derart gewählt ist, dass er bei einem Kontakt mit dem Fluid seine Farbe kontinuierlich verändert.

6. Verfahren nach einem der Ansprüche 1 bis 5, **dadurch gekennzeichnet, dass** der Teststreifen (1) mehrere Zeitindikatoren (11) aufweist die derart gewählt sind, dass sie bei einem Kontakt mit dem Fluid jeweils ihre Farbe innerhalb direkt aufeinander folgender und/oder zeitlich voneinander beabstandeter Zeitintervalle verändern.

7. Verfahren nach einem der Ansprüche 1 bis 6, **dadurch gekennzeichnet, dass** eine Bildsequenz aufgezeichnet wird, die zusätzlich zu dem ersten Farbbild mindestens ein weiteres Farbbild aufweist.

8. Verfahren nach einem der Ansprüche 1 bis 7, **dadurch, gekennzeichnet, dass** eine Bildsequenz aufgezeichnet, wird, die zusätzlich zu dem ersten Farbbild mindestens ein weiteres Farbbild aufweist, auf dem zumindest der Farbindikator abgebildet ist, dass der Zeitunterschied zwischen den Zeitpunkten, an denen die Farbbilder aufgezeichnet werden, ermittelt wird, dass der dem Farbindikator zugeordnete Bildbereich für das wenigstens eine weitere Farbbild lokalisiert und der Farbwert dieses Bildbereichs bestimmt wird, und dass aus dem (den) Zeitunterschied(en) und den Farbwerten und mit Hilfe von vorgegebenen Vergleichswerten die Analytkonzentration in der Probe bestimmt wird.

9. Computerprogramm, das auf einer einen Mikroprozessor aufweisenden, programmierbaren Kamera, insbesondere einer Handy-Kamera ablauffähig ist, **dadurch gekenntzeichnet, dass** das Computerprogramm zur Ausführung eines Verfahrens nach einem der Ansprüche 1 bis 8 geeignet ist, wenn es auf der Kamera abläuft.

10. Computerprogramm nach Anspruch 9, **dadurch gekennzeichnet, dass** es auf einem Speicherelement, insbesondere einem Read-Only-Memory, einem Random-Access-Memory oder einem Flash-Memory abgespeichert ist.

11. Server mit einem einen Datenspeicher aufweisenden Mikrocomputer, der an eine Telekommunikationseinrichtung angeschlossen ist und/oder einen Internetzugang aufweist, **dadurch gekennzeichnet, dass** in dem Datenspeicher ein Computerprogramm nach Anspruch 9 abgelegt ist, und dass der Server derart ausgestaltet ist, dass das Computerprogramm über die Telekommunikationseinrichtung und/oder den Internetzugang von dem Datenspeicher herunterladbar ist.

## Claims

1. Method for measurement of the concentration of at least one analyte which is contained in a sample of a biological fluid,
a) wherein a test strip (l) is prepared, which has at least one test point, at least one time indicator (11) and at least one reference colour range (4) which comprises the colour white and/or a colour scale,
b) wherein the fluid sample is brought into contact with the test point and the time indicator (11),
c) wherein a colour indicator is arranged at the test point as a function of the concentration of the analyte,
d) wherein the colour of the time indicator is changed as a function of the time duration for which the fluid has been brought into contact with the test point and independently of the concentration of the at least one analyte,
e) wherein a camera (8) is positioned on the test strip (l),
f) wherein at least one measured value for the relative position between the camera (8) and the test strip (1) is determined, and is compared with a nominal value range,
g) wherein, if there is a discrepancy between the measured value and the nominal value range, the camera (8) is moved relative to the test strip (l) in order to reduce the discrepancy, and steps f) and g) are repeated,
h) wherein the camera (8) is used to record a colour image on which at least the colour indicator, the time indicator (11) and the reference colour range (4) are imaged,
j) wherein the image areas which are associated with the colour indicator, the time indicator (11) and the reference colour range (4) are localized in the colour image, and the colour values of these image areas are determined,
k) wherein the time duration between the fluid sample being brought into contact with the test point and the recording of the colour image is determined on the basis of the colour value determined for the time indicator (11), with the aid of predetermined reference values, and
l) wherein the analyte concentration in the sample is determined on the basis of the colour values determined for the colour indicator and the reference colour range (4) and on the basis of the time duration, with the aid of predetermined comparison values.

2. Method according to Claim 1, **characterized in that** a visual and/or audible signal is produced as a function of the discrepancy between the measured value and the nominal value range.

3. Method according to Claim 1 or 2, **characterized in that**, in the situation in which no discrepancy is found between the relative position and the nominal value range during the comparison process, the at least one colour image is stored in an image memory.

4. Method according to one of Claims 1 to 3, **characterized in that** the size and/or position of the test strip (1) in the colour image is determined and is compared with preset values, and **in that**, if there is a discrepancy between the size and/or position and the preset values, the colour image is geometrically distorted and/or scaled such that the size and/or position of the test strip (1) matches the preset values in the distorted and/or scaled colour image.

5. Method according to one of Claims 1 to 4, **characterized in that** the time indicator (11) is chosen such that it varies its colour continuously when in contact with the fluid.

6. Method according to one of Claims 1 to 5, **characterized in that** the test strip (1) has a plurality of time indicators (11), which are chosen such that, when in contact with the fluid, they each change their colour within time intervals which follow one another directly and/or are separated in time from one another.

7. Method according to one of Claims 1 to 6, **characterized in that** an image sequence is recorded which has at least one further colour image in addition to the first colour image.

8. Method according to one of Claims 1 to 7, **characterized in that** an image sequence is recorded which has at least one further colour image in addition to the first colour image, on which further colour image at least the colour indicator is imaged, **in that** the time difference between the points in time at which the colour images are recorded is determined, **in that** the image area associated with the colour indicator is localized for the at least one further colour image, and the colour value of this image area is determined, and **in that** the analyte concentration in the sample is determined from the time difference or differences and the colour values, and with the aid of predetermined comparison values.

9. Computer program which can be run on a programmable camera, in particular a mobile telephone camera, which has a microprocessor, **characterized in that** the computer program is suitable for carrying out a method according to one of Claims 1 to 8, when it is run on the camera.

10. Computer program according to Claim 9, **characterized in that** the computer program is stored in a memory element, in particular a read only memory, a random access memory or a flash memory.

11. Server having a microcomputer which has a data memory, is connected to a telecommunications facility and/or has Internet access, **characterized in that** a computer program according to Claim 9 is stored in the data memory, and **in that** the server is designed such that the computer program can be downloaded via the telecommunications facility and/or the Internet access, from the data memory.

## Revendications

1. Procédé pour mesurer la concentration d'au moins une substance à analyser contenue dans un échantillon de fluide biologique,
a) selon lequel une bande de test (1) est mise à disposition, laquelle présente au moins un point de test, au moins un indicateur de temps (11) et au moins une zone de couleur de référence (4) incluant la couleur blanche et/ou une échelle de couleurs,
b) selon lequel l'échantillon de fluide est mis en contact avec le point de test et l'indicateur de temps (11),
c) selon lequel un indicateur à couleur est disposé sur le point de test en fonction de la concentration de la substance à analyser,
d) selon lequel la couleur de l'indicateur de temps varie en fonction de la durée de mise en contact du fluide avec le point de test et indépendamment de la concentration de l'au moins une substance à analyser,
e) selon lequel une caméra (8) est positionnée sur la bande de test (1),
f) selon lequel au moins une valeur mesurée de la position relative entre la caméra (8) et la bande de test (1) est déterminée et comparée avec une plage de valeurs de consigne,
g) selon lequel en cas d'écart entre la valeur mesurée et la plage de valeurs de consigne, la caméra (8) est déplacée pour réduire l'écart par rapport à la bande de test (1) et les étapes f) est g) sont répétées,
h) selon lequel une image en couleur est acquise à l'aide de la caméra (8), sur laquelle sont représentés au moins l'indicateur à couleur, l'indicateur de temps (11) et la zone de couleurs de référence (4),
j) selon lequel les zones de l'image qui sont associées à l'indicateur à couleur, à l'indicateur de temps (11) et à la zone de couleurs de référence (4) sont localisées dans l'image en couleur et les valeurs de couleur de ces zones de l'image sont déterminées,
k) selon lequel la durée entre la mise en contact de l'échantillon de fluide avec le point de test et l'acquisition de l'image en couleur est déterminée au moyen de la valeur de couleur déterminée pour l'indicateur de temps (11) à l'aide de valeurs de référence prédéfinies et
l) selon lequel la concentration de la substance à analyser dans l'échantillon est déterminée au moyen des valeurs de couleur déterminées pour l'indicateur à couleur et la zone de couleurs de référence (4) et au moyen de la durée à l'aide de valeurs comparatives prédéfinies.

2. Procédé selon la revendication 1, **caractérisé en ce qu'**un signal visuel et/ou sonore est généré en fonction de l'écart entre la valeur mesurée et la plage de valeurs de consigne.

3. Procédé selon la revendication 1 ou 2, **caractérisé en ce que** dans le cas où aucun écart entre la position relative et la plage de valeurs de consigne n'est constaté lors de la comparaison, l'au moins une image en couleur est stockée dans une mémoire d'image.

4. Procédé selon l'une des revendications 1 à 3, **caractérisé en ce que** la taille et/ou la position de la bande de test (1) dans l'image en couleur est déterminée et comparée avec des valeurs par défaut et qu'en cas d'écart entre la taille et/ou la position et les valeurs par défaut, l'image en couleur est déformée et/ou mise à l'échelle géométriquement de telle sorte que la taille et/ou la position de la bande de test (1) dans l'image en couleur déformée et/ou mise à l'échelle coïncide avec les valeurs par défaut.

5. Procédé selon l'une des revendications 1 à 4, **caractérisé en ce que** l'indicateur de temps (11) est choisi de telle sorte qu'il change continuellement de couleur lors d'un contact avec le fluide.

6. Procédé selon l'une des revendications 1 à 5, **caractérisé en ce que** la bande de test (1) présente plusieurs indicateurs de temps (11) qui sont choisis de telle sorte qu'en cas de contact avec le fluide, ils modifient à chaque fois leur couleur à l'intérieur d'intervalles de temps qui se suivent directement et/ou qui sont espacés dans le temps les uns des autres.

7. Procédé selon l'une des revendications 1 à 6, **caractérisé en ce qu'**une séquence d'images est enregistrée, laquelle présente au moins une image en couleur supplémentaire en plus de la première image en couleur.

8. Procédé selon l'une des revendications 1 à 7, **caractérisé en ce qu'**une séquence d'images est enregistrée, laquelle présente au moins une image en couleur supplémentaire en plus de la première image en couleur sur laquelle est représenté au moins l'indicateur à couleur, que la différence de temps entre les instants auxquels sont enregistrées les images en couleur est déterminée, que la zone d'image associée à l'indicateur à couleur est localisée pour l'au moins une image en couleur supplémentaire et la valeur de la couleur de cette zone d'image est déterminée, et que la concentration de la substance à analyser dans l'échantillon est déterminée à partir du (des) différence(s) de temps et des valeurs de couleur et à l'aide de valeurs comparatives prédéfinies.

9. Programme informatique qui peut être exécuté sur une caméra programmable qui présente un microprocesseur, notamment une caméra de téléphone portable, **caractérisé en ce que** le programme informatique est conçu pour mettre en oeuvre un procédé selon l'une des revendications 1 à 8 lorsqu'il est exécuté sur la caméra.

10. Programme informatique selon la revendication 9, **caractérisé en ce qu'**il est enregistré sur un élément de mémorisation, notamment une mémoire morte, une mémoire vive ou une mémoire flash.

11. Serveur comprenant un microordinateur qui présente une mémoire de données qui est raccordé à un équipement de télécommunication et/ou qui présente un accès à l'Internet, **caractérisé en ce que** dans la mémoire de données est stocké un programme informatique selon la revendication 9 et que le serveur est configuré de telle sorte que le programme informatique peut être téléchargé depuis la mémoire de données par le biais de l'équipement de télécommunication et/ou de l'accès à l'Internet.
